(19) Europäisches Patentamt
European Patent Office
Office européen des brevets

(11) Publication number: **0 254 488**
**A2**

(12) # EUROPEAN PATENT APPLICATION

(21) Application number: **87306315.0**

(22) Date of filing: **16.07.87**

(51) Int. Cl.⁴: **C08L 65/00** , H01B 3/30 , C08L 71/00

(30) Priority: **23.07.86 GB 8617990**
**23.07.86 GB 8617991**

(43) Date of publication of application:
**27.01.88 Bulletin 88/04**

(84) Designated Contracting States:
**AT BE CH DE FR GB IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Shamsedin, Rostami**
**10 Linwood Avenue**
**Middlesbrough Cleveland(GB)**

(74) Representative: **Chapman, Kenneth Hazel et al**
**Imperial Chemical Industries PLC Legal Department: Patents P.O. Box 6 Bessemer Road**
**Welwyn Garden City Herts, AL71HD(GB)**

(54) **Polymer composition and a coated conductor or filled composition based thereon.**

(57) A polymer composition containing a major proportion of polyarylketone, balance polyimide is used as an insulating coating for an electrical conductor or as the polymer constituent of a filled polymer composition. The polyarylketone preferably contains one or more of the units
I - Ph - O - Ph - CO;
II - Ph - O - Ph - O - Ph - CO;
III - Ph - O - Ph - Ph - O - Ph - CO
The coated electrical conductors show advantageous pliability and resistance to environmental cracking. The filled compositions can have a higher glass transition temperature than corresponding composition containing no polyimide, while retaining high resistance to organic solvents.

EP 0 254 488 A2

## Polymer composition and a coated conductor or filled composition based thereon

The invention relates to a polymer composition and a coated conductor or filled composition based thereon.

Materials used for coating electrical conductors, such as polyethylene and polyvinylchloride, are not suitable for prolonged use at elevated temperatures, for example over 100°C, or if liable to be exposed to an aggressive chemical environment, or indeed to hot hydrocarbon liquids. Furthermore they, particularly polyvinylchloride, burn with the evolution of dense smoke and toxic fumes. An electrical conductor coated with a polyarylketone is resistant to many chemical environments and can be used for prolonged periods at temperatures which may exceed 200°C but, since the polymer is crystalline, pliability is not entirely satisfactory and this can limit its use.

According to the invention in its first aspect an electrical conductor has at least one coating, the coating or at least one of the coatings being formed from a polymer composition containing 55 to 85% by weight of a polyarylketone, balance polyimide.

Some filled polymer compositions have mechanical properties pointing to use as metal replacement. Recently developed compositions based on polymeric materials having higher softening temperatures are suitable for use at temperatures higher than had been possible previously. One such polymeric material is a polyarylketone having a polymer chain in which at least some aryl groups are linked together through ketone groups and in particular through ketone and ether groups. However, the maximum working temperature for these compositions is still not suitable for the most demanding applications such as in close proximity to car engines.

Even by copolymerisation it is difficult to obtain a desired combination of high temperature properties and chemical resistance, particularly together with a relatively low melting point to minimise degradation during production and/or processing of the composition. Furthermore, the properties of the copolymer may be sensitive to small changes in its composition. Additionally, copolymers having a useful balance of properties may require the use of one or more monomers which are not readily available and/or which are expensive.

According to the invention in its second aspect a polymer composition contains a fibrous reinforcing agent, a polyarylketone and a polyimide and is characterised in that the content of the fibrous reinforcing agent is at least 5% by weight and the content of polyarylketone is 50 to 95% by weight of the polyarylketone plus polyimide.

The polyarylketone component typically has repeating units

-Ar - CO -

where Ar is a divalent aromatic group which may vary from repeating unit to repeating unit in the polymer chain.

Ar may contain one or more aromatic nuclei, for example a residue of benzene, biphenyl, terphenyl, naphthalene, indene or fluorene, and may carry one or more substituents not such as to interfere with the preparation of the polyarylketone. Such substituents, can be halogen, hydrocarbon, ether or thioether. It is generally preferred that at least some of the grous Ar contain two aromatic groups linked together through a non-aromatic group. Specifically, it is preferred that at least some of the groups Ar have the general formula

$-Ar^1 -Y - Ar^1 -$

where each $Ar^1$, which may be the same or different, is an optionally substituted divalent aromatic hydrocarbon residue;

Y is -O-, -S-, -SO-, $-SO_2-$, -CO-, an optionally substituted divalent aliphatic hydrocarbon residue, or a group $(Y^1-Ar^1)_m Y^1 -$;

each $Y^1$, which may be the same or different, is -O-, -S-, -SO-, $-SO_2-$, -CO-or an optionally substituted divalent aliphatic hydrocarbon residue; and

m is an integer.

Preferred polyarylketones are those having repeating units of the general formula.

$-Ar^1 -Y^1 -Ar^1 -CO -$

where $Ar^1$ and Y are defined.

Groups $Ar^1$ are preferably para-phenylene or 4,4′-biphenylene. Groups Y may be -O-or $-C(CH_3)_2$ -or $(Y^1 - Ar^1)_m$ $Y^1$-in which each $Y^1$ may be the same or different and, when m is greater than one, each $Ar^1$ may be the same or different. Preferably $Y^1$ is -O-or -CO-.

In groups $(Y^1 -Ar^1)_m Y^1$-, m is conveniently 1, 2 or 3, and this group may be, for example, -O-Ph -O-; -O-Ph-Ph -O-; or -O-Ph -CO-Ph - O-Ph - where Ph is para-phenylene. It will be appreciated that some polymers of this type may be regarded as copolymers containing different divalent aromatic residues which are linked together through non-aromatic groups such as oxygen atoms. If the polyarylketone contains $-SO_2$-groups, these preferably are not more than 25% of the total of the groups -CO-and $-SO_2$-.

The polyarylketone may contain repeating units
I -Ph - O - Ph - CO; and/or
II -Ph - O - Ph - O - Ph - CO -; and/or
III -Ph - O - Ph - Ph - O - Ph - CO - ;

In particular it may consists essentially of either of repeating units I or II; or be a copolymer containing at least one of repeating units I and II; such copolymers may contain also repeating units III. Particular examples consist essentially of a combination of repeating units I and II, or of repeating units II and III. If other units are present, the content thereof is preferably less than 25% mole. We have obtained a composition having a useful combination of properties when the polyarylketone consists essentially of repeating units II.

The polyimide is typically a material in which the repeating units contain a group

A) 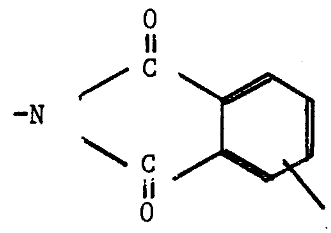

or a group

B) 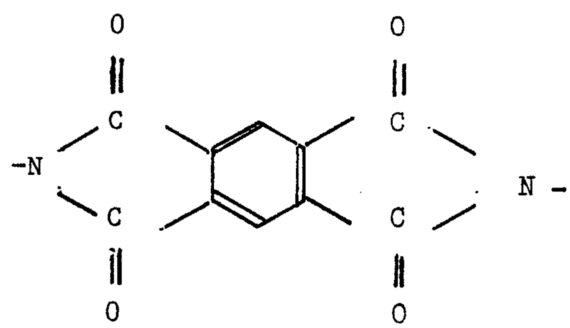

For convenience hereafter, group A will be represented by NIM, its mirror immage:

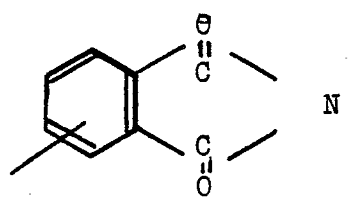

by MIN and group B by NIMIN.

The polyimide may contain repeating units
-NIM-$Y^2$ $(Ar - Y^2)_n$ MIN - Ar - ; or
-$Y^2$ -Ar $(Y^2)_n$ MIN $(Ar)_n$ ; or
-NIMIN $(Y^2)_n$ Ar $(Y^2)_n$
where
NIM, MIN, NIMIN, and Ar are as defined;
each $Y^2$, which may be the same or different, is -CONH -, NOCH-or a group $Y^1$;
n is zero or an integer; and
$Y^1$ is as defined.

The polyimide may be a polyetherimide or a polyamideimide, particularly one in which the ether or amide group is bonded directly to the benzene ring of the imide group. The value of n is typically zero, one or two.

More particularly the polyimide may contain repeating units

IV -NIM - O - Ph - iPr - Ph - O - MIN - mPh - ;
V -NIM - O - Ph - Ph - O - MIN - Ph - O - Ph -;
VI -NIM - CO - MIN - Ph - O - Ph - .
VII -CONH - Ph - $SO_2$ -Ph - NHCO - MIN - Ph -;
VIII -$CH_2$ -Ph - NHCO - MIN - Ph -;
IX -O-Ph - O - Ph - O - MIN - ;
X -O-Ph - O - Ph - MIN - ; and
XI -NIMIN - Ph - $CH_2$ -Ph -

where NIM, MIN, NIMIN and Ph are as defined;
iPr is -$C(CH_3)_2$-;and
m Ph is meta-phenylene.

We have obtained coated conductors and filled compositions having a useful combination of properties when the polyimide consists essentially of repeating units IV.

In a particular coated conductor or filled composition the polyarylketone consists essentially of repeating units II and the polyimide consists essentially of repeating units IV.

The polymers are of high molecular weight. The molecular weight may be determined using any technique applicable to a given polymer, eg melt viscosity or viscosity of a solution. This melt viscosity at least 0.01 preferably at least 0.1 $kNsm^{-2}$, but preferably not more than 4 especially not more than 2.0 $kNsm^{-2}$ measured using a ram extruder fited with a 3.175 mm x 0.5 mm die operating at a shear rate of 1000 $s^{-1}$. The temperature at which melt viscosity is determined depends on the glass transition temperature or the melting temperature of the polymer and is typically 400°C for polymers having a melting temperature up to about 370°C. For viscosity of a solution, reduced viscosity is determined using 1g or inherent viscosity using 0.1g, of polymer per 100 $cm^3$ of solution. The solvent can for example be concentrated sulphuric acid for several polyketones and m-cresol or chlorinated solvents for several polyimides. Preferred polymers have a reduced viscosity of inherent viscosity in the range 0.2 to 3.0, especially 0.4 to 1.5, measured at 25°C. The polyarylketone preferably has an inherent viscosity of at least 0.7, especially at least 1.0.

Polyarylketones which can be used in the coated conductors or filled compositions and the preparation thereof are described, inter alia, in GB-A 971227, 1078234 and 1086021, Canadian 847963 and US 344158, 3442857, 3953400, 3956240 and 4247682. A polyarylketone containing repeating units II, which is crystalline and tough and has an inherent viscosity of at least 0.7, is described in more detail in EP-A-001879.

Polyimides, in particular polyetherimides, and the preparation thereof are described, inter alia, in GB-A-1353962, 1463300, 1465825 and 1550985 and US 3838097, 3887588, 4024110 and 4107147.

For the coated conductors of the invention in its first aspect the preferred composition depends on the specific material used but in general we prefer that it contain 60 to 80% by weight of the polyarylketone.

More specifically, if the polyimide consists essentially of repeating units IV, the preferred composition contains up to 75, especially 55 to 75, more especially 60 to 70% by weight of polyarylketone consisting essentially of repeating units I, or 65 to 85, especially 70 to 80% by weight of polyarylketone consisting essentially of repeating units II.

The composition used as the coating contains few, if any, additives, other than stabilisers.

It is preferred that the content of stabilisers be not more than 5%, especially not more than 1% but at least 0.05%, especially at least 0.1%, by weight of the composition.

The composition may be made by for example particle or melt blending, more specifically by tumber blending or in a high speed mixer. The blend thus obtained may be coated directly onto an electrical conductor. Alternatively, it may be extruded into a lace which is chopped to give granules. The granules can be used to coat an electrical conductor, or several electrical conductors, which conductor or conductors may be coated or uncoated.

The coated conductor may be a single conductor having a single coating or possibly more than one coating, at least one coating being formed from the composition. In particular, a bundle of insulated electrical conductors is provided with coating of the composition. The composition can be the insulating layer or an intermediate or outer sheath or any combination thereof; for example in a bundle of insulated electrical conductors the composition may be both the insulating coating on each individual conductor and also the outer sheath for the bundle.

The first aspect of the invention includes a process in which at least one coated or uncoated electrical conductor, is coated with the composition.

The coating is applied to the electrical conductor preferably using a melt extrusion technique. Standard wire coating conditions can be used with the exception that the extruder is operated at a higher temperature than is usual with most plastics materials, for example at a barrel temperature of at least 340°C and preferably with a die temperature which is at least 375°C and may be over 400°C.

Electrical conductors coated with the composition are more pliable and more resistant to environmental cracking than similar conductors having the same coating thickness of a coating of the polyarylketone only.

For the filled composition according to the invention in its second aspect, if the polyimide consists essentially of repeating units IV, the proportion of polyarylketone consisting essentially of repeating units I is preferably up to 75, especially 50 to 75% and the proportion of polyarylketone consisting essentially of repeating units II is preferably 65 to 85% by weight of the total weight of polyarylketone plus polyimide.

The filled composition can be formed into shaped articles having a useful combination of properties. Mechanical properties are generally similar to those of compositions containing only the polyarylketone, but the glass transition temperature is increased and hence the articles are suitable for use at higher temperatures that if containing only the polyketone. The composition is not appreciably affected by a range of organic solvents even though the polyimide component is soluble in many organic solvents such as dichlormethane.

The fibrous reinforcing agent can be organic or inorganic such as poly-paraphenylene terephthalamide fibre, glass fibre, or, preferably, carbon fibre. It may be added as short or chopped fibre which typically has a mean fibre length of only a few centimetres, particularly not more than 2 cm, for example about 6mm. Using such short or chopped fibres, the composition typically contains up to 35 preferably at least 20% by weight of fibrous reinforcing agent. For structural applications, it is preferred to use a continuous fibrous material, for example continuous glass or carbon fibre, and it is especially preferred that the composition contain 30 to 70, especially 50 to 70% by volume of fibrous reinforcing agent.

The composition may also contain one or more other materials, for example organic and inorganic fillers such as polytetrafluoroethylene, graphite, boron nitride, mica, talc and vermiculite; nucleating agents; and stabilisers such as phosphates. The total proportion of additives, including fibrous reinforcing agent, should be such that the composition continas at least 20% by volume of the mixture of polyarylketone and polyimide.

The composition may be made by mixing for example by particle or melt blending the polyarylketone and the polyimide with the fibrous reinforcing agent and possibly other materials.

More specifically a polyarylketone and a polyimide, both in the form of a dry powder or granules, can be mixed with the fibrous reinforcing agent and if required the said other materials, using a technique such as tumbe blending or high speed mixing. The blend thus obtained may be extruded into a lace and chopped to give granules. The granules can be subjected to a forming operation, for example injection moulding or extrusion, to give a shaped article. They may be blended together in one stage or in more than one stage in any order.

Alternative the composition may be obtained by passing the fibrous reinforcing agent as an essentially continuous fibre, for example of glass or carbon, into contact with a melt formed from or containing the polyarylketone and the polyimide. The composition is obtained as filaments of the fibrous reinforcing agent impregnated with the mixture of polyarylketone and polyimide and this material may be used alone, or together with other materials, for example a further quantity of the same or a different polyarylketone or polyimide or mixture thereof to form an article by an appropriate shaping technique. The production of compositions by this technique is described in more detail in EP-A-56703, 102158 and 102159.

Yet a further technique involves 2 stages, the first of which comprises contacting the fibrous reinforcing material with a solution of the polyimide in for example m-cresol or a chlorinated solvent such as dichlormethane. The fibrous reinforcing agent may be coated with polymer solution, separated and dried to remove solvent. However, using essentially continuous fibre, this is passed through a vessel containing polymer solution and then through a heated zone to evaporate off the solvent. The polymer solution used for such a process typically contains 1 to 20g, preferably 2 to 10g, of polyimide for each 100 $cm^3$ of solution. This is not a particularly preferred technique since it is difficult to totally remove the solvent and the presence of solvent can adversely affect the properties of the composition. Then follows a second stage in which the impregnated fibrous material is mixed with the polyarylketone either using a solids or melt blending technique or using the impregnation process of EP-A-56703, 102158 and 102159. Alternatively the impregnated fibres may be laminated with a film fomed from the polyarylketone.

In a yet further procedure, a mixture of polyarylketone and polyimide is formed into a film, and the film is laminated to the fibrous reinforcing agent which may be in the form of a non-woven mat of relatively short fibres, a woven cloth or essentially continuous fibre. The film may be formed by blending the polyarylketone and polyimide and melt extruding the blend to form a film, for example by extruding the molten polymer blend through a slot die and drawing off the extruded film over rollers. Lamination is effected under conditions of temperature and pressure sufficient to cause the mixture of polyarylketone and polyimide to flow and impregnate the fibrous reinforcing material. Thus, lamination to form the composition is preferably effected at at least 320°C typically typically 340°C to 420°C, and at a pressure of at least 0.1 preferably at least 10, $MN/m^2$. Lamination is conveniently effected using at least one pair of heated rollers.

In the process of shaping the composition, including any annealing stage the crystallinity of the polymer should be developed as far as possible. This is important because otherwise crystallisation could continue during subsequent during use of an article and result in dimensional changes, warping or cracking and general change in physical properties. Furthermore, increased crystallinity results in improved environmental resistance.

Crystallinity in the compositions is due mainly, and in most of the compositions solely, to the polyarylketone. To achieve improved crytallisation behaviour, the polymer compositions of the present invention may be modified by having on the polymeric chains of the polyarylketone component, terminal ionic groups -A -X, where A is an anion and X is a metal cation.

The anion is preferably selected from sulphonate, carboxylate, sulphinate, phosphonate, phosphate, phenate and thiophenate and the metal cation is an alkali metal or alkaline earth metal.

By such modification the crystallisation temperature (Tc) may be raised by at least 2°C in comparison with a similar composition not containing the ionic end-groups. However, useful compositions are obtained even when there is little or no change in Tc if sufficient nucleation results from the presence of end groups to increase the number of spherulites.

Such modified polymers are most suitably produced by reaction of a preformed polymer with reactive species containing the ionic group. Procedures for the production of modified polymers are described in more detail in our EP-A-152161. The procedure is generally applicable to the modification of polyarylketones for inclusion in the composition.

The invention is illustrated by the following examples and test results.

## Coated conductors

### Example 1

Polyetheretherketone ('Victrex' (Registered Trade Mark) PEEK aromatic polymer 380 P grade, obtainable from Imperial Chemical Industries PLC) and polyetherimide ("Ultem", grade 1000, obtainable from the General Electric Company of Schenectady, New York), were dry mixed by tumble blending for 5 to 10 minutes in the respective proportions of 70:30 by weight. The polyetheretherketone consisted essentially of repeating units II and the polyetherimide of repeating units IV.

The blend was formed into granules by extrusion into a lace which was cooled by passing into a water bath and then cut to form granules. The extrusion was effected using a single screw Plaston extruder having a 3.8 cm diameter screw with a length to diameter ratio of 24 : 1 and having the following temperature profile from the hopper end to the die : 345°C, 360°C, 365°C, 370°C and 380°C. The die was of 5 mm diameter and the extruder was operated at a rate of about 5kg/hour.

The composition was coated onto a 1mm diameter copper wire using an 18mm Bone extruder fitted with a Betrol designed tubing wire coating die with total die diameter of 1.5mm. The wire was passed through the die at a rate of about 15m/minute and the extruder was operated at a rate of about 1.6kg/hour to give a coating of average thickness 0.25 mm. The die temperature for wire coating was about 400°C.

For the purposes of comparison, samples of the wire were also coated with the polyetheretherketone alone.

The coated wires were annealed at 300°C for one hour in a circulating air oven to obtain maximum crystallinity and subjected to tests of solvent resistance and bending. The results of these tests are set out in Tables One and Two respectively.

TABLE ONE

| Test (c) | PEEK (a) | PEEK + PEI (b) |
|---|---|---|
| 1D wrap | Some small cracks | No visible cracks |
| 5D wrap | Some large cracks | Very few small cracks |
| 8D wrap | Many large cracks | Some small cracks |
| 20D wrap | Many large cracks | Some small cracks |

Notes to Table One

(a) PEEK indicates that the material used for coating onto the wire was the polyetheretherketone alone.

(b) PEEK + PEI indicates that the material used for coating onto the wire was the 70:30 by weight polyetheretherketone-polyetherimide blend.

(c) Test : the annealed coated wires were wrapped round mandrel (glass tubes) of diameter 1, 5, 8 and 20 times that of the coated wire to give 1D, 5D, 8D and 20D wrap respectively, then immersed in isopropanol containing a red dye for 24 hours at 60°C. The coatings were examined under a microscope (25 times magnification) for cracking (shown by the dye).

TABLE TWO

| Coating | Load applied (g) (d) | Recoil | |
|---|---|---|---|
| | | Degrees (e) | % (e) |
| PEEK (a) | 250 | 45-50 | 50-56 |
| PEEK + PEI (b) | 120 | 85 | 94 |

Notes to Table Two

(a) and (b) are as defined in Notes to Table One.

(d) The annealed coated wires were then bent through 90° over a 6 mm diameter mandrel using the specified load applied. The load was then removed and the amount of recoil measured.

(e) Recoil is measured from the 90° of arc and is expressed both in degrees of arc and as a percentage of 90°. (90° of recoil = 100% recoil, when the bent wire returns to its original, unbent, position).

Example 2

Compositions were prepared by blending together one or other of two polyarylketones with a polyimide in various proportions using the procedure as described in Example 1.

Each blend was then melt homogenised in a Brabender rheometer operating at 400°C for 5 to 10 minutes, and the molten blend was compression moulded to form test samples 50 mm x 12.7 mm x 0.5 mm using the following conditions. The molten blend was placed in an electrically heated press between two sheets of aluminium foil. The blend was preheated in the press at 380°C for 5 minutes without applying pressure and then pressed for 10 minutes at 400°C at 0.14 MN/m$^2$ (20 psi), whereafter the pressure was released. The moulding was allowed to cool to 150°C, then ejected from the press and allowed to cool in air. The moulding obtained was subjected to Differential Scanning Calorimetry is to determine some of the properties of the blend, which are reported in Table Three, together with results of the effects of immersion in dichloromethane (DCM).

TABLE 3

| Composition Type (f) | Ratio (h) | Tg (i) | DCM uptake (j) |
|---|---|---|---|
| PEEK-PEI | 90:100 | 148 | 2.3 |
| PEEK-PEI | 80:20 | 151 | 5.7 |
| PEEK-PEI | 70:30 | 160 | 4.1 |
| PEEK-PEI | 60:40 | 168 | 25.6 |
| PEK-PEI | 90:10 | 158 | 0.7 |
| PEK-PEI | 80:20 | 162 | 0.8 |
| PEK-PEI | 70:30 | 167 | 3.2 |
| PEK-PEI | 60:40 | 173 | 8.6 |
| PEK-PEI | 50:50 | 180 | 22.8 |

Notes to Table Three

(f) PEEK-PEI is a blend of polyaryletheretherketone (as used in Example 1) and polyetherimide (as used in Example 1);
PEK-PEI is a blend of polyaryletherketone consisting essentially of repeating units of formula I and having a melt viscosity of 0.4 kNsm$^{-2}$ measured at 400°C as described hereinbefore with polyetherimide (as used in Example 1)

(h) Ratio is the weight ratio of the components of the blend.

(i) Tg is the glass transition temperature of the blends in their amorphous state as determined by differential scanning calorimetry (DSC-2) with a heating rate of 20°C/min.

Example 3

High temperature and Flammability Tests

(a) the coated wire of Example 1 was placed in an oven at 300°C. After four months the wire was removed from the oven and the coating was examined under a microscope. The surface was found to have become roughened. In contrast, when a wire coated only with the polyetheretherketone was subjected to the same conditions, it was found that the surface had started to crack.

(b) the composition used for wire coating in Example 1 was subjected to a thermal stability test using thermo-gravimetric analysis. No sign of degradation was observed on heating a sample of the composition from ambient temperature to 500°C at a heating rate of 10°C/minute.

(c) a further sample of the composition used in Example 1 was subjected to a flammability test in accordance with BS 4066 part 1: 1980 and was found to satisfy the test requirements.

(d) a series of compositions were subjected to various tests to determine burning characteristics. Further details are given in Table Four.

TABLE FOUR

| Composition Type (f) (k) | Ratio (h) | LOI (l) | Smoke test (m) Time (min) | $D_m$ | Wt loss (%) | Gas analysis (n) CO | HCN | $SO_2$ | $NO_x$ |
|---|---|---|---|---|---|---|---|---|---|
| PEEK | 100 | 37.4 | NM | 5.0 | NM | 290 | ND | ND | NM |
| PEEK-PEI | 90:10 | 38.1 | 18 | 5.2 | 2.0 | 300 | 1 | ND | 4 |
| PEEK-PEI | 80:20 | 38.4 | 20 | 8.9 | 2.2 | 275 | 2 | ND | 6 |
| PEEK-PEI | 70:30 | 39.2 | 20 | 15.5 | 2.6 | 325 | 2 | ND | 7 |

Notes to Table Four

(f) and (h) are as defined in Notes to Table Three.

(k) PEEK is the polyetheretherketone used to prepare the coating composition in Example 1.

(l) LOI is the limiting oxygen index which is measured according to ASTM Test Method D2863-77 and in the minimum concentration of oxygen which will just support combustion of a test specimen of dimensions 6.5 (± 0.5) mm x 3.5 (± 0.5) mm x 70 - 150 mm cut from injection moulded discs of the polymer or polymer composition. The specimen is ignited using a hydrogen or propane flame and must burn for at least three minutes or for a length of at least 50 mm.

(m) Smoke test is a smoke density test carried out in a NBS smoke chamber using the procedure of ASTM Test Method E662-79. The test specimens were 76 mm x 76 mm x 3.5 (± 0.5) mm, (cut from injection moulded discs) and were mounted in a holder to expose an area about 65 mm x 65 mm. The test was carried out in the flamming mode and the smoke density was determined by passing a collimated light beam (from an incandescent light source) vertically through the smoke chamber to a photodetector.

Time is the time, in minutes, for the minimum transmission to be achieved.

$D_m$ is the Maximum specific optical density.

(m) After exposure of the sample in the smoke chamber for 20 minutes, gas samples were taken using Drager tubes and the samples were analysed. The result for CO includes a correction for the quantities of this gas emitted by the gas jets. The results are given in ppm of the gas.

ND means not detected and indicates that the proportions of these gases were below the lower limits of detection of the test,that is 1 ppm of HCN and 1 ppm of $SO_2$.

NM means not measured.

Filled compositions

Example 4

A polyetheretherketone and a polyetherimide ("Ultem", grade 1000, obtainable from the General Electric Company of Schenectady, New York), were dry mixed by tumble blending the polymer powder for 5 to 10 minutes in the proportions of 70% by weight of polyetheretherketone and 30% by weight of polyetherimide. The polyetheretherketone was a polyarylketone consisting essentially of repeating units II and having a melt viscosity of about 0.1 $kNsm^{-2}$ measured as hereinbefore described at 400°C. The polyetherimide was a polyimide consisting essentially of repeating units IV.

The polymer blend thus obtained was dry blended with diphenylsuphone by tumbling the materials together in a closed container in a weight ratio of two parts of the polymer blend to three part of diphenylsulphone.

The mixture of polymer blend and diphenyl sulphone thus prepared was used to impregnate continuous carbon fibres according to the following procedure. This procedure is described in EP-A 56703.

25 collimated tows of continuous carbon fibres ("Magnamite" AS-4 supplied by Hercules Inc of Delaware, USA) each two containing about 12000 individual filaments were drawn at a rate of 300 mm/minute over a series of stationary guide bars to provide a band of width about 150 mm having a tension of about 50 kg. When the fibres had been guided into continguous relationship they were pulled over a series of 4 fixed, heated, cylindrical bars of 12.6 mm diameter maintained at 390°C. The powder mixture of polymer blend and diphenyl sulphone was fed to the nip formed between the carbon fibre band and the first fixed cylindrical bar. The powder melted rapidly to provide a melt pool in the nip which impregnated the fibre band passing over the bar. The structure was passed over and under the three further heated bars without the addition of further of the polymer mixture. Provision was made for extracting the fumes of diphenyl sulphone which were involved. The product obtained was a continuous tape, 150 mm wide and about 0.125 mm thick containing 60% by weight (53% by volume) of the carbon fibre which had been well wetted by the polymer blend.

The polymer composition of Example 4 was then formed into laminates. Sections cut from the impregnated tapes of Example 4 were laminated together by compression moulding at 400°C for five minutes at an applied pressure of 10 $MN/m^2$. The laminates were then cooled to about 80°C, still in the press and under pressure, using air and then water, to give a cooling rate of about 15°C per minute. Several laminates were formed from the impregnated tape. A laminate was obtained using 16 thicknesses of the impregnated tape of Example 4 laid up to give uniaxial alignment of the carbon fibre and a laminate thicknesses of about 2 mm. The laminate was then sujected to mechanical testing.

Example 5

The process of Example 4 was repeated using a different polayrylketone, consisting essentially of repeating units I and having a melt viscosity of 0.4 $KNsm^{-2}$ measured at 400°C as hereinbefore described. The polymers were blended in equal proportions by weight.

In Table Five are given the results of mechanical testing, at 25°C, on the laminates of Examples 4 and 5 and also on a laminate formed using only the polyarylketone of Example 4.

Table Five

| Sample (a) | Longitudinal Flexure (b) Mod (GN/m²) | St (MN/m²) | Transverse Flexural Strength (MN/m²)(c) | SBSS (d) (MN/m²) |
|---|---|---|---|---|
| 1 | 112 | 1880 | 107 | 83 |
| 2 | 129 | 1675 | 120 | 101 |
| A | 134 | 2034 | 140 | 105 |

Notes to Table Five

(a) 1 and 2 are the laminates of Examples 4 and 5 respectively. A is a laminate produced as described in Example 4 but using only the polyarylketone of Example 4.

(b) Longitudinal Flexure was measured by the technique of ASTM Test Method D 790 - 80, using a 100 mm span. Mod means modulus. St means strength.

(c) Transverse Flexural Strength was measured by the technique of ASTM Test Method D790-80, using a 40 mm span.

(d) SBSS is short beam shear strength and is determined by the technique of ASTM Test Method D2344-72, using a span to sample thickness ratio of 5:1.

The polyarylketone of Example 4, and the polyarylketone/polyimide blends of Examples 4 and 5, that is the polymer composition omitting the carbon fibre, were subjected to dynamic mechanical analysis using a duPont 981 Dynamic Mechanical Analyser and heating at 5°C/minute from -140°C with an oscillation amplitude of 0.2mm as recommended for polymers. The glass transition temperature of the polyarylketone was 143°C, that of the polyarylketone/polyimide blend of Example 4 was 162°C and that of the polyarylketone polyimide blend of Example 5 was 186°C.

**Claims**

1. An insulated electrical conductor comprising at least one electrical conductor and at least one coating, the coating or at least one of the coatings being formed from a polymer composition containing 55 to 85% by weight of a polyarylketone, balance polyimide.

2. A polymer composition which contains a fibrous reinforcing agent, a polyarylketone and a polyimide, characterised in that the content of the fibrous reinforcing agent is at least 5% by weight and the content of polyarylketone is 50 to 95% by weight of the polyarylketone plus polyimide.

3. A conductor as claimed in claim 1 or a composition as claimed in claim 2 in which the polyarylketone has repeating units

-Ar - CO -

where

Ar is a divalent aromatic group which may vary form repeating unit to repeating unit in the polymer chain and is derived from an optionally substituted mono-or poly -nuclear hydrocarbon or is a group $-Ar^1$ -Y $Ar^1$

where

each $Ar^1$, which may be the same or different, is an optionally substituted divalent aromatic hydrocarbon residue;

Y is -O-, -S-, -SO-, $-SO_2-$, -CO-, and optionally substituted divalent aliphatic hydrocarbon residue or a group $(Y^1 -Ar^1)_m Y^1$ -;

each $Y^1$, which may be the same or different, is -O-, -S-, -SO-, $-SO_2-$, -CO-or an optionally substituted divalent aliphatic hydrocarbon residue; and

m is an integer.

4. A conductor or composition as claimed in claim 3 in which the polyarylketone is one having repeating units of the formula

I -Ph - O - Ph - CO -; and/or

II -Ph - O - Ph - O - Ph - CO -; and/or

III -Ph - O - Ph - Ph - O - Ph - CO - and preferably consists essentially of repeating units I or II or is a copolymer consisting essentially of a mixture of repeating units II with either repeating units I or III.

5. A conductor as claimed in any one of claims 1,3 and 4 or a composition as claimed in any one of claims 2 to 4, in which the polyimide has repeating units of the general formula

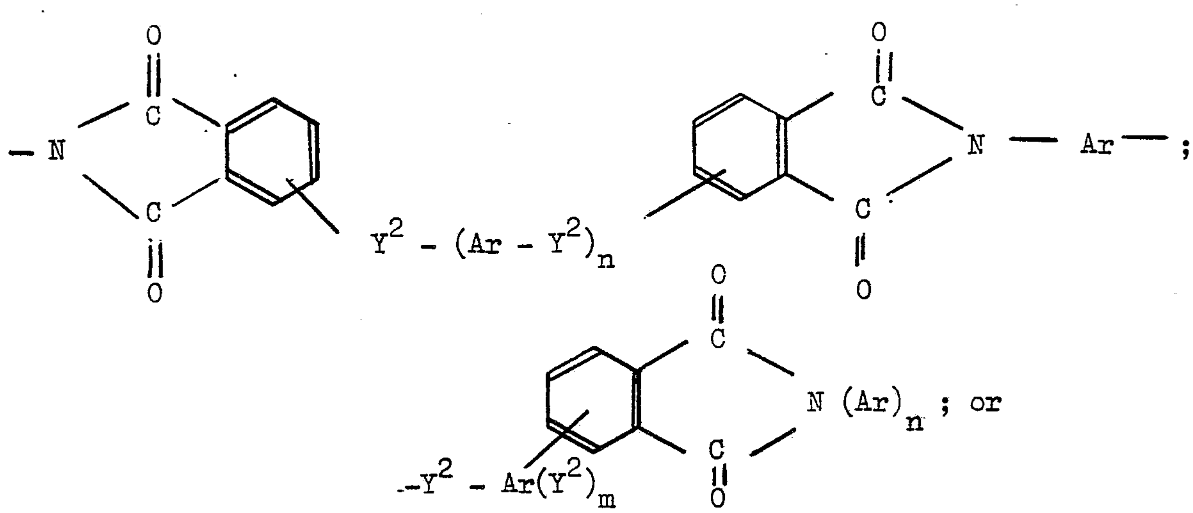

; or

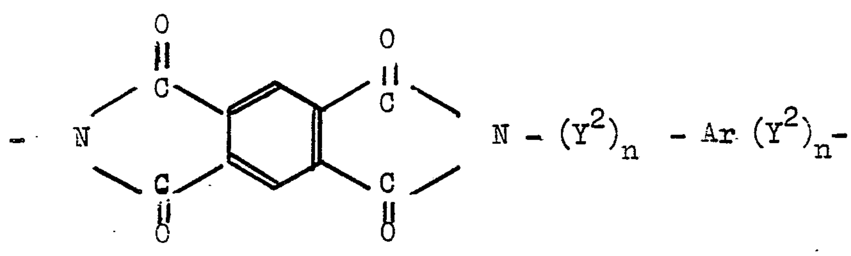

where

Ar is as defined in claim 3

each $Y^2$, which may be the same or different, is - CONH -, -NHCO -or a group $Y^1$ ; and

n is zero or an integer.

6. A conductor or composition as claimed in claim 5 in which the polyimide has repeating units

IV 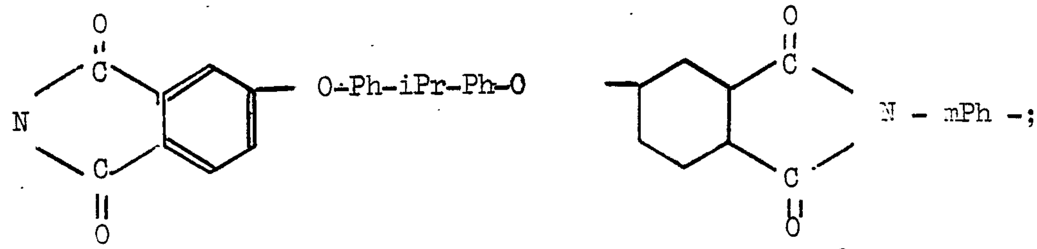

V 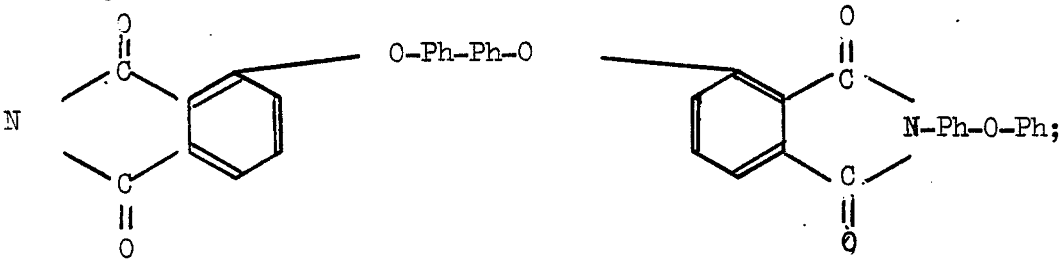

VI 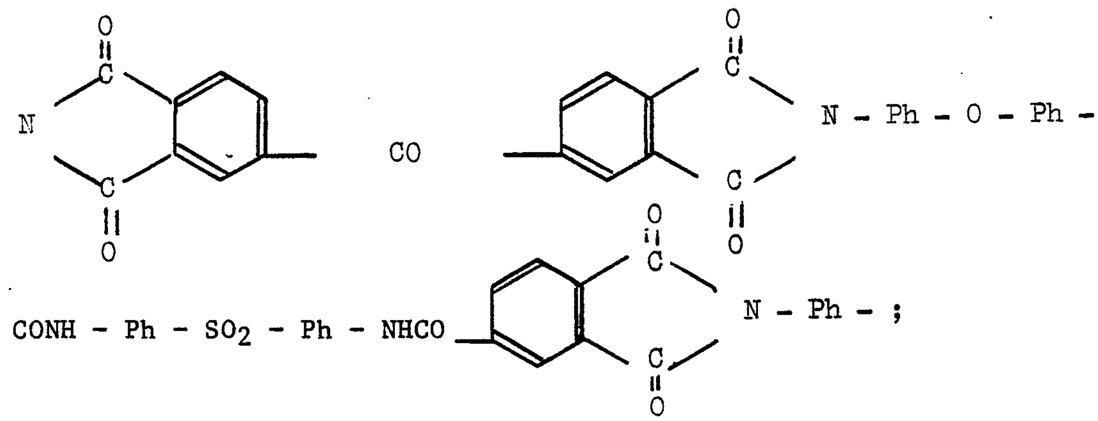

VII

VIII 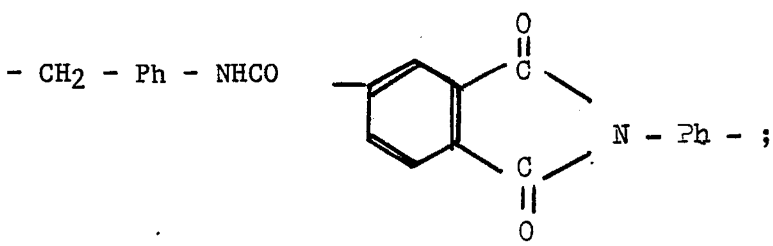

IX 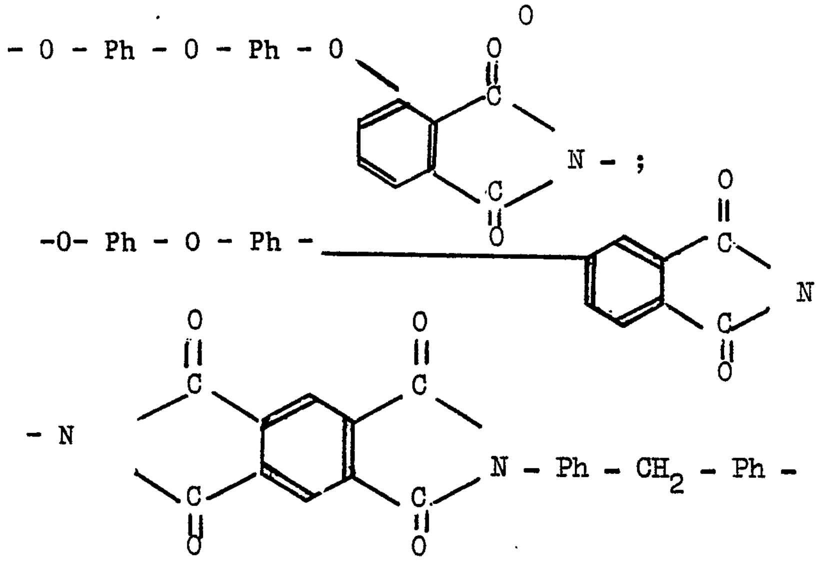

X

XI

where
Ph is para-phenylene
mPh is meta - phenylene and
iPr is - $C(CH_3)_2$ -.

7. A conductor or composition as claimed in any one of claims 3 to 6 in which wherein the polyarylketone consists essentially of the repeating units
-Ph - O - Ph - O - Ph - CO -;
and the polyimide consists essentially of the repeating units

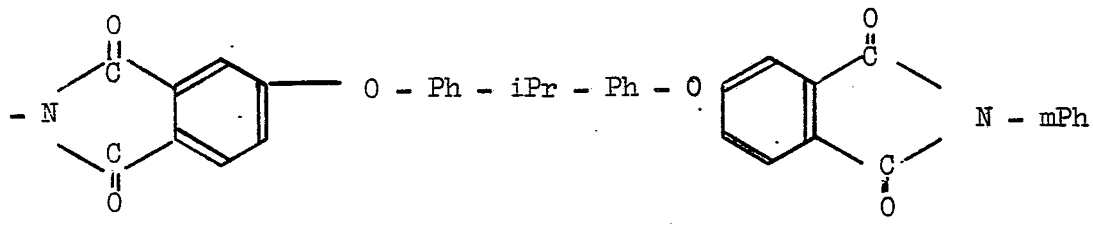

8. A conductor or composition as claimed in any one of claims 3 to 7 in which the polymer composition contains up to 75% by weight of a polyarylketone consisting essentially of repeating units of the formula I or 65 to 85% by weight of a polyarylketone consisting essentially of the repeating units of the formula II, the remainder being a polyimide consisting essentially of the repeating units IV. 9.

9. A process for the production of a coated electrical conductor in which at least one, coated or uncoated, electrical conductor, is coated with a polymer composition containing from 55 to 85% by weight of a polyarylketone, balance polyimide by melt extrusion, using a barrel temperature of at least 340°C and a die temperature of at least 375°C.

10. A process for producing a polymer composition according to claim 2 which comprises mixing a polyarylketone, a polyimide and a fibrous reinforcing agent by one of the following procedures:

a) the polyarylketone and polyimide both in the form of a dry powder or granules are mixed with the fibrous reinforcing agent using a solids or melt blending technique;

b) essentially continuous fibrous reinforcing agent is passed into contact with a melt formed from the polyarylketone and the polyimide or formed from a molten mixture containing the polyarylketone and the polyimide;

c) A solution of both the polyarylketone and the polyimide in a solvent is contacted with the fibrous reinforcing agent;

d) a mixture of the polyarylketone and the polyimide is formed into a film and the film is laminated to the fibrous reinforcing agent;

e) the fibrous reinforcing agent is impregnated with a solution of the polyimide and the polyimide impregnated fibrous reinforcing agent is mixed with the polyarylketone; or

f) the polyimide impregnated fibrous reinforcing agent is laminated with a film formed from the polyarylketone.

11. A laminate formed from a composition as claimed in any one of claims 3 to 10 by laminating impregnated filaments of the fibrous reinforcing agent to other impregnated filaments thereof at a temperature of at least 320°C and an applied pressure of at least 0.1 $MN/m^2$.